# EUROPÄISCHE PATENTSCHRIFT

(11) **EP 2 464 500 B1**
(45) Veröffentlichungstag und Bekanntmachung des Hinweises auf die Patenterteilung: **10.07.2013**
(21) Anmeldenummer: 09777812.0
(22) Anmeldetag: 11.08.2009
(51) Int. Cl.: B29C 43/30, B29D 99/00, B32B 27/00

(54) **KUNSTSTOFFSCHICHT MIT SICHTBARER INNERER DISKONTINUITÄT UND VERFAHREN ZU IHRER HERSTELLUNG**
PLASTIC LAYER HAVING A VISIBLE INNER DISCONTINUITY AND PROCESS FOR THE MANUFACTURING
COUCHE DE PLASTIQUE À DISCONTINUITÉ INTERNE VISIBLE ET PROCÉDÉ POUR LA FABRIQUER

(43) Veröffentlichungstag der Anmeldung: 20.06.2012
(73) Patentinhaber: Armstrong DLW AG, 74321 Bietigheim-Bissingen (DE)
(72) Erfinder: WEGNER, Iris, 71638 Ludwigsburg (DE); WEDEL, Boris, 74321 Bietigheim-Bissingen (DE); EISELE, Richard, 74321 Bietigheim-Bissingen (DE); SEIBEL, Timo, 9500 Villach (AT); KLAWITTER, Yvonne, 66386 St. Ingbert (DE)
(74) Vertreter: Müller-Boré & Partner Patentanwälte
(86) Internationale Anmeldenummer: PCT/EP2009/005824
(87) Internationale Veröffentlichungsnummer: WO 2011/018097

(56) Entgegenhaltungen:
- DE-A1- 1 479 872
- FR-A- 1 154 666
- GB-A- 720 922
- GB-A- 2 229 442

## Beschreibung

Die vorliegende Erfindung betrifft eine Kunststoffschicht mit sichtbarer innerer Diskontinuität, eine mehrschichtige Kunststoffbahn oder -platte, umfassend eine Unterschicht und eine Deckschicht in Form vorstehender Kunststoffschicht, Verfahren zu deren Herstellung und deren Verwendung.

Mehrschichtige Kunststoffbahnen auf Polyvinylchlorid(PVC)-Basis mit einer transparenten Deckschicht als Nutzschicht finden seit Jahrzehnten Anwendung als Bodenbeläge. Es werden jedoch auch andere Kunststoffe bzw. Polymere, wie beispielsweise Ethylen-Vinylacetat(EVA)-Copolymere, Kunststoffe auf Basis von olefinischen Polymeren, wie Polyethylen(PE), Polypropylen(PP), Ethylen-Propylen-Copolymere sowie Copolymere des Ethylens mit anderen olefinischen ungesättigten Verbindungen zur Herstellung von Bodenbelägen eingesetzt. Eine mehrschichtige Kunststoffbahn oder -platte, die als Bodenbelag verwendet wird, besteht aus mindestens zwei Schichten, einer transparenten Deckschicht bzw. Nutzschicht (auch Klarschicht oder Klarfolie genannt) und einer Unterschicht (auch Unterfolie genannt). Oftmals ist zwischen der Deckschicht und Unterschicht eine weitere Schicht (welche als Printfolie, Weißfolie, Druckfolie, Druckträger oder bedruckte Weißfolie bezeichnet wird) angeordnet.

Zur Darstellung einer Musterung kann die transparente Deckschicht (Klarschicht) auf ihrer Unterseite, d.h. auf der der Unterschicht zugewandten Oberfläche ein - oder mehrfarbig bedruckt werden. Zusätzlich oder anstatt kann die Unterschicht auf ihrer der Deckschicht zugewandten Oberfläche ein- oder mehrfarbig bedruckt werden. Dabei werden zur Bedruckung bzw. Bemusterung vorzugsweise bis zu 16 verschiedene Farben verwendet, mehr bevorzugt bis zu 8 Farben.

Sofern eine weitere, nicht transparente Schicht (Weißfolie) zwischen der Deckschicht und der Unterschicht angeordnet wird, erfolgt die Bemusterung auf der der Deckschicht zugewandten Oberfläche der weiteren Schicht, entweder zusätzlich oder anstelle des Musters auf der Unterseite der transparenten Deckschicht, da in diesem Fall die Unterschicht nicht sichtbar ist.

Die einzelnen Folien werden herkömmlicherweise in einer automatischen Laminiermaschine (auch AUMA genannt) unter Anwendung von Druck (typischerweise etwa 8-30 N/cm²) und Temperatur (typischerweise etwa 170 bis 195°C) während eines Zeitraums von etwa 1 bis 2 Minuten kraftschlüssig miteinander verbunden. Um die glatte Oberfläche des Belags gegen Verkratzen unempfindlicher zu machen und um die Optik des Druckmusters zu verstärken, erfolgt nach dem Laminieren der Schichten oftmals eine oberflächliche Prägung. Eine dreidimensionale Optik, d.h. der optische Eindruck, der Bodenbelag habe trotz einer ebenen Ausgestaltung eine dreidimensionale Struktur, kann damit nicht erzielt werden.

In diesem Zusammenhang kann eine mehrschichtige Kunststoffbahn oder -platte mit einer dreidimensionalen Optik dadurch hergestellt werden, dass man die Unterfolie vor dem Laminieren an ihrer Oberfläche einseitig mit einer Prägung versieht und dann die Deckschicht und gegebenenfalls die weitere Schicht (Weißfolie) unter einer bestimmten Temperaturführung, die von den Erweichungspunkten der jeweiligen Schichten abhängt, kraftschlüssig miteinander verbindet.

DE 14 79 872 A beschreibt ein Verfahren zur Herstellung granit-, teppich-, mosaikartig gemusterter Bahnen oder Platten aus Kunststoffen. GB 2 229 442 A beschreibt ein mehrfarbiges Bahnmaterial. GB 720,922 A beschreibt eine marmorierte Kunststoffbahn. FR 1.154.666 A beschreibt Paneele aus Kunststoffmaterialien mit dekorativen Oberflächen.

Die vorstehend genannten Ausführungsformen mit optischen Effekten weisen jedoch den Nachteil auf, dass hier nur symmetrische Produkte mit einem Rapport erhalten werden. Da jedoch eine vollständige Asymmetrie ohne Rapport für eine flächige Anwendung ideal wäre, ist die Erschließen solcher neuen Strukturen wünschenswert.

Somit liegt der vorliegenden Erfindung die Aufgabe zugrunde, eine Kunststoffschicht bereitzustellen, die aufgrund ihrer eigenen Materialstruktur zu optischen Effekten führt, wobei die Kunststoffschicht bestenfalls vollständige Asymmetrie und damit keinen Rapport aufweist.

Diese Aufgabe wird durch die in den Ansprüchen gekennzeichneten Gegenstände gelöst.

Insbesondere wird eine Kunststoffschicht bereitgestellt, wobei das schichtbildende Material sichtbare innere Diskontinuität aufweist, erhältlich durch das Pressen oder Walzen von Kunststoffgranulat unter Druck und Wärme, wobei das Kunststoffgranulat granulierte Folie umfasst und wobei das Material der granulierten Folie Effektpigmente und/oder Leuchtpigmente umfasst.

Die Erfindung beruht dabei auf der Erkenntnis, dass eine Kunststoffschicht mit beispielsweise einer ausgeprägten dreidimensionalen Optik und/oder beispielsweise einem Perlmutt-Effekt dadurch hergestellt werden kann, dass man Kunstoffgranulat unter Druck und Wärme presst oder walzt. Der erfindungsgemäße optische Effekt kann beispielsweise durch Vergleich mit einer erstarrten Schmelze oder teilweise nicht aufgeschmolzenem Material beschrieben werden. Dabei sind sowohl scharfe Konturen als auch "Schlieren" gewollt. Ein vollständig asymmetrisches Produkt ohne jeglichen Rapport ist dabei ideal, man erhält beispielsweise eine dreidimensional erscheinende Struktur auch ohne eine vorstehend beschriebene Prägung.

Dementsprechend ist gemäß der vorliegenden Erfindung die sichtbare innere Diskontinuität aus der Gruppe von durchsichtigen/nicht-durchsichtigen Bereichen, Materialverwerfungen, Verschmierungen, Ebenenversatz, Faltungen, Überlagerungen, Schlieren, Kanten und Kinken, einzeln oder in Kombination, ausgewählt.

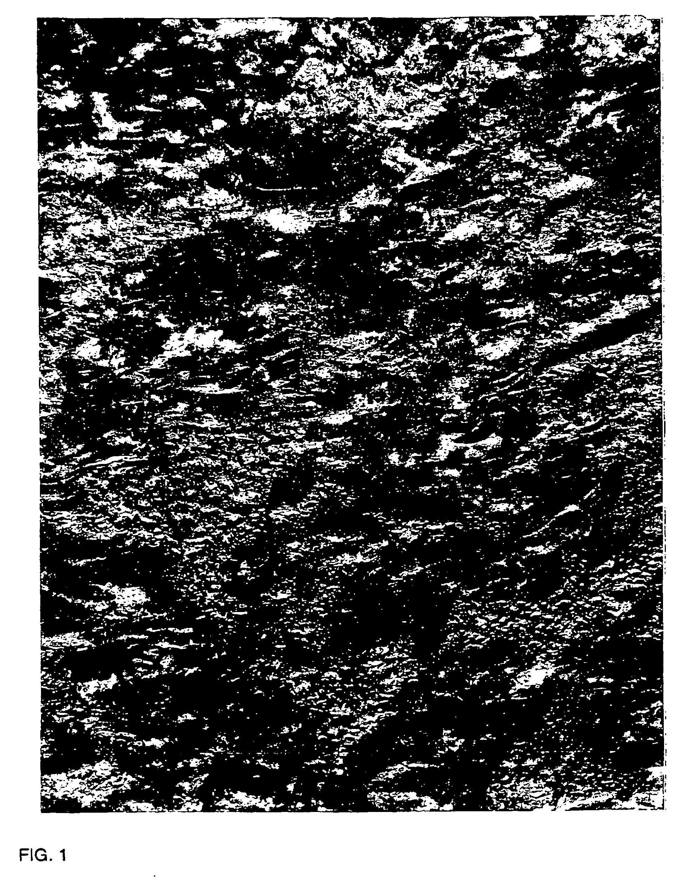

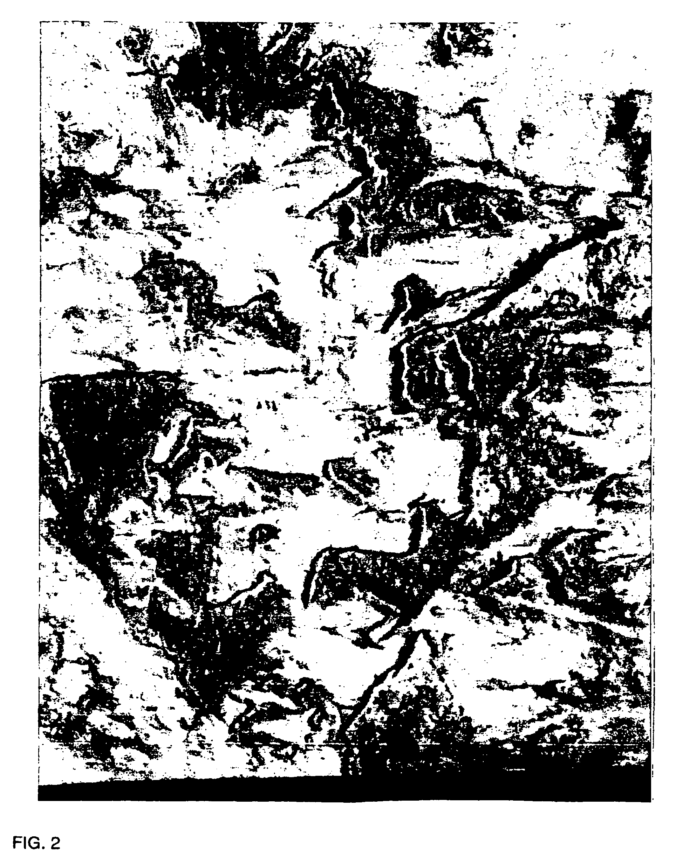

Die Figuren 1 und 2 zeigen jeweils Ausschnitte von Mehrschichtsystemen der nachfolgenden Beispiele 5 und 6, deren Deckschicht die vorstehend beschriebene erfindungsgemäße Kunststoffschicht darstellt.

In einer bevorzugten Ausführungsform der vorliegenden Erfindung kann die Kunststoffschicht hinterdruckt werden, um die erfindungsgemäßen Effekte zu verstärken und/oder zu modifizieren. Eine solche hinterdruckte erfindungsgemäße Kunststoffschicht kann beispielsweise in ein mehrlagiges System integriert werden, wie nachstehend beschrieben.

Das Material für die Matrix der erfindungsgemäßen Kunststoffschicht unterliegt keiner besonderen Beschränkung und kann beispielsweise ausgewählt sein aus Polyvinylchlorid(PVC), Etylen-Vinylacetat-Copolymer(EVA), Homo- und Copolymeren von ethylenisch ungesättigten Verbindungen, Ethylen-Alkylacrylat-Copolymeren, Ethylen-Propylen-Dien-Mischpolymeren(EPDM), Dien-enthaltenden Copolymeren, wie Styrol-Butadien-Styrol(SBS)-Blockcopolymeren und Styrol-Isopren-Styrol(SIS)-Blockcopolymeren und dergleichen.

Wegen seiner hervorragenden Gebrauchseigenschaften, insbesondere im Hinblick auf eine weiterführende Verwendung im Zusammenhang mit einem Bodenbelag, ist ein Material auf PVC-Basis bevorzugt.

Je nach Art der Kunststoffschicht kann diese Weichmacher und übliche Zusätze, wie Füllstoffe, Färbemittel, wie Pigmente und organische und anorganische Farbstoffe, und Hilfsstoffe enthalten.

Als Beispiele für Füllstoffe seien Kreide, Bariumsulfat, Schiefermehl, Kieselsäure, Kaolin, Quarzmehl, Talkum, Lignin, Zellulose, Glaspulver, Textil- oder Glasfasern, Zellulosefasern und Polyesterfasern genannt, die in einer Menge von etwa 20 bis 80 Gew.-%, bezogen auf das Gesamtgewicht der betreffenden Schicht, eingesetzt werden können. Zu den Hilfsstoffen sind beispielsweise Antioxidantien, Antistatika, Stabilisatoren, UV-Absorber, Treibmittel, Fungizide, Gleitmittel und Bearbeitungshilfsmittel in den üblichen Mengen zu zählen.

Gemäß der vorliegenden Erfindung enthält die Kunststoffschicht zusätzlich Effektpigmente, insbesondere anorganische, organische und/oder physikalische Effektpigmente und/oder Leuchtpigmente. Beispiele für solche Effektpigmente sind Metalleffektpigmente, Perlglanzpigmente, Glimmer, Perlmutt, Interferenz-Pigmente, welche beispielsweise unter den Handelsnamen Iriodin, Colorstream, Xirallic, MagnaPearl, Dynacolor und Lumina erhältlich sind. Beispiele für solche Leuchtpigmente sind Osixo, Luminova und Fluorescin.

Gemäß der vorliegenden Erfindung ist die Kunststoffschicht mit sichtbarer innerer Diskontinuität durch das Pressen oder Walzen von Kunststoffgranulat erhältlich. Dabei umfasst das Kunststoffgranulat erfindungsgemäß granulierte Folie.

Für die Herstellung der erfindungsgemäßen Kunststoffschicht mit sichtbarer innerer Diskontinuität beispielsweise auf Basis von PVC wird die Folie für das Kunststoffgranulat aus den folgenden Ausgangsmaterialien in den angegebenen Mengen hergestellt:
Als PVC ist ein durch übliche Polymerisationsverfahren, wie Suspensionspolymerisation (S-PVC), Emulsionspolymerisation (E-PVC) und Substanz- bzw. Massepolymerisation (M-PVC) erhältliches PVC mit Molmassen von ca. 30.000 bis ca. 130.000 g/mol, was K-Werten von etwa 45 bis etwa 80 entspricht, verwendbar. Bevorzugt sind K-Werte von etwa 60 bis etwa 70 und mehr bevorzugt von etwa 65. Es können auch Gemische von verschiedenen PVC-Typen eingesetzt werden.

Wie schon vorstehend beschrieben, werden weiter Weichmacher und übliche Zusätze, wie Füllstoffe, Färbemittel, wie Pigmente und organische und anorganische Farbstoffe, und Hilfsstoffe verwendet. Beispiele für Füllstoffe, Hilfsstoffe, Effektpigmente und Leuchtpigmente sind bereits vorstehend beschrieben.

Als Weichmacher können grundsätzlich alle üblichen Weichmacher verwendet werden, wie beispielsweise Phthalsäureester, Trimellitsäureester, Phosphorsäureester, Benzoesäureester, Polymer-Weichmacher, wie Polyester aus Adipin-, Sebacin-, Azelain- und Phthalsäure mit Diolen etc..

Erfindungsgemäß bevorzugt sind Ester der Phthalsäure, wie Dioctylphthalat (DOP) bzw. Di(2-Ethylhexyl)-Phthalat (DEHP), Di(2-Propylheptyl)-Phthalat (DPHP), Diisononylphthalat (DINP), Diisododecylphthalat (DIDP), Dibutylphthalat (DBP), Diethylphthalat (DEP), Benzylbutylphthalat (BBP), Butyloctylphthalat, Dipentylphthalat und dergleichen, sowie alternativ zu den Phthalaten Di(Isononyl)cyclohexan-1,2-dicarboxylat (DINCH, Handelsname Hexamoll), Benzoate, Terephtphalate, Sulfonate (beispielsweise des Phenols, Handelsnamen Mesamoll I und II), Trimellitate, Adipate und Phosphate, jeweils einzeln oder in Kombination.

Die Folie als Ausgangsmaterial für das Kunststoffgranulat zur Herstellung der erfindungsgemäßen Kunststoffschicht kann somit wie folgt zusammengesetzt sein:

| Ausgangsmaterial | Mengenbereich (Gew.- %) | Bevorzugter Mengenbereich (Gew.-%) |
|---|---|---|
| PVC | 59-95 | 65-80 |
| Weichmacher | 5-35 | 10-30 |
| Stabilisator | 0,1-8 | 0,5-5 |
| Antistatika | 0,1-4 | 0,2-2 |
| Effektpigmente | 0-10 | 0,2 bis 1 |
| Leuchtpigmente | 0-25 | 1-20 |

Massetemperaturen des zu kalandrierenden Gemischs aus z.B. Kunststoff, gegebenenfalls Füllstoffen, Additiven, Verarbeitungshilfsmitteln, gegebenenfalls Pigmenten und/oder Farbstoffen etc.: 140 bis 220°C; vorzugsweise 160-195°C.

Kalandertemperatur: 140-230 C; vorzugsweise 160-195°C.

Kalandergeschwindigkeit: 0,5-70 m/min; vorzugsweise 5-45 m/min.

Resultierende Foliendicke: 0,1 bis 1 mm; vorzugsweise 0,2 bis 0,5 mm.

Als Ausgangsmaterial für das Kunststoffgranulat werden erfindungsgemäß solche Folien verwendet, die durch Effektpigmente und/oder Leuchtpigmente, wie schon vorstehend beschrieben, modifiziert sind. Dadurch ergibt sich beispielsweise vorteilhaft ein "Perlmutt-Effekt", wenn ein aus solchen Folien hergestelltes Granulat wie vorstehend beschrieben zur Schicht gepresst oder gewalzt wird.

In der Herstellung vorstehender modifizierter Folien kann die Verteilung der Effektpigmente und/oder Leuchtpigmente beim Kalandrieren gleichmäßig erfolgen, aber auch einer unregelmäßigen Verteilung in Form von Verschmierungen, lokaler Konzentration, Verzügen und Verwerfungen unterliegen. Wird aus letzteren Folien ein entsprechendes Granulat hergestellt und dieses anschließend erfindungsgemäß eingesetzt, können die vorstehend beschriebenen erfindungsgemäßen Effekte vorteilhafterweise noch verstärkt bzw. modifiziert werden.

Durch beispielsweise die Verwendung von unterschiedlichen PVCs und/oder unterschiedlichen Weichmachern für verschiedene Anteile des zu pressenden oder zu walzenden Kunststoffgranulats können die optischen Effekte der vorliegenden Erfindung zusätzlich durch beispielsweise unterschiedliche Brechungsindizes an den Kanten erzeugt werden. Insbesondere bei der erfindungsgemäßen Verwendung von verschiedenen Foliengranulaten mit unterschiedlichen, wie vorstehend beschriebenen Zusammensetzungen und unterschiedlichem Schmelzverhalten wird der Effekt der sichtbaren inneren Diskontinuität noch verstärkt. Dabei werden die Foliengranulate mit unterschiedlichem Schmelzverhalten beispielsweise beim Pressen oder Walzen nur teilweise aufgeschmolzen.

Das Granulieren erfolgt beispielsweise in einer Schneidmühle, Messermühle, Schlagrotormühle oder in einem Ein- oder Mehrwellenzerkleinerer, wobei das erhaltene Material anschließend gesiebt wird.

Das Pressen zur Herstellung der erfindungsgemäßen Kunststoffschicht erfolgt beispielsweise in einer statischen Presse, wobei Kunstoffschichten mit einer Dicke von 0,5 bis 4 mm, bevorzugt 2,5 bis 3 mm erhalten werden. Ein Beispiel für eine statische Presse ist eine Heizpresse. Es kann aber auch eine kontinuierliche Presse wie beispielsweise eine Doppelbandpresse eingesetzt werden. Statt des Pressens kann die erfindungsgemäße Kunststoffschicht auch durch Walzen erhalten werden. Für das Pressen zur Herstellung der erfindungsgemäßen Kunststoffschicht beträgt der Druckbereich 5 bis 140 bar und bevorzugt 40 bis 100 bar. Dabei erfolgt das Pressen bei einer Temperatur im Bereich von 150 bis 220°C, bevorzugt im Bereich von 175 bis 195°C. Im Fall des Walzens zur Herstellung der erfindungsgemäßen Kunststoffschicht beträgt der Walzenspaltbereich 0,05 bis 2 mm und bevorzugt 0,2 bis 0,7 mm. Dabei erfolgt das Walzen bei einer Temperatur im Bereich von 130 bis 220°C, bevorzugt im Bereich von 160 bis 190°C. Schließlich wird mit einer Geschwindigkeit von 15 bis 30 m/min, bevorzugt von 18 bis 24 m/min gewalzt.

Des weiteren wird gemäß der vorliegenden Erfindung eine mehrschichtige Kunststoffbahn oder -platte, umfassend eine Unterschicht und eine auf der Unterschicht angeordnete und kraftschlüssig damit verbundene Deckschicht in Form vorstehender Kunststoffschicht bereitgestellt.

Unter mehrschichtigen Kunststoffbahnen oder -platten im Sinne der vorliegenden Erfindung werden Flächengebilde verstanden, die aus mindestens zwei Schichten bestehen, die miteinander verbunden sind. Derartige Kunststoffbahnen oder -platten können als Wand- oder Deckenverkleidung, Dekorfolie oder künstliches Furnier und insbesondere als Bodenbelag verwendet werden.

Jede der vorgenannten Schichten, insbesondere die Deckschicht und die Unterschicht kann ein- oder mehrschichtig ausgebildet sein. Aus produktionstechnischen Gründen und hinsichtlich der Kosten ist es oftmals vorteilhafter, zwei oder mehr dünne Folien miteinander zu verbinden (beispielsweise durch Laminieren), um eine entsprechend dicke Deckschicht zu erhalten, als die Schicht in ihrer gewünschten Dicke in einem Arbeitsgang herzustellen.

Die einzelnen Schichten können aus dem gleichen Grundmaterial hergestellt sein, jedoch ist dies nicht zwingend, sofern sich die Schichten nur miteinander kraftschlüssig verbinden lassen. Da nur die Deckschicht die Eigenschaften der erfindungsgemäßen Kunststoffschicht aufweisen muss, ist man in der Wahl der Kunststoffe bzw. Kunststoffgemische und der Zusatzstoffe in einer weiteren Schicht (beispielsweise Weißfolie) und insbesondere der Unterschicht relativ frei. Aus praktischen Gründen wird die Unterschicht aus bis zu 80 Gew.-% Recyclingmaterial (auch Recyclat oder Scrap genannt) hergestellt. Dieses Recyclingmaterial ist beispielsweise zerkleinertes Material bereits gebrauchter Beläge, aber auch Abfallmaterial aus der Produktion neuer Beläge, wie zum Beispiel Randabschnitte und Ähnliches.

Mehrschichtige Kunststoffbahnen oder -platten zur Verwendung als Bodenbelag werden erfindungsgemäß aus folgenden Schichten aufgebaut:
- Deckschicht; Dicke zwischen etwa 0,05 mm und etwa 4 mm, vorzugsweise zwischen etwa 0,1 und etwa 2 mm. Die Deckschicht kann aus 1 bis 8 Einzelkunststoffschichten bzw. -folien laminiert und/oder Granulatschichten gepresst oder gewalzt sein, wobei 1 bis 4 Einzelfolien bzw. Schichten bevorzugt sind.
- gegebenenfalls Weißfolie (Printfolie), gegebenenfalls gefärbt und/oder bedruckt; Dicke zwischen etwa 0,05 mm und etwa 0,3 mm, vorzugsweise zwischen 0,1 und 0,2 mm.
- Unterschicht (Unterfolie) in beliebiger Farbe; Dicke zwischen etwa 0,05 mm und etwa 4 mm, vorzugsweise zwischen etwa 0,3 und 2 mm. Die Unterschicht kann aus 1 bis 6 Einzelfolien laminiert sein, wobei 1 bis 3 Einzelfolien bevorzugt sind.

Die Gesamtdicke der mehrschichtigen Kunststoffbahnen oder -platten beträgt zwischen etwa 0,7 und etwa 10 mm, wobei eine Gesamtdicke zwischen etwa 1 mm und etwa 5 mm bevorzugt ist.

Typischerweise wird die Deckschicht aus einer erfindungsgemäßen Kunststoffschicht oder durch das Pressen oder Walzen von Kunststoffgranulat auf die Zwischen- oder Unterschicht mit einer Dicke von etwa 0,2 bis 1 mm gebildet. Die Dicke einer Zwischenschicht (Weißfolie) beträgt im allgemeinen etwa 0,10 bis 0,12 mm und die Unterschicht wird, wie die Deckschicht, häufig aus einem Laminat aus mindestens zwei Folien gebildet, wobei jede der beiden Folien etwa 0,7 mm bis 0,8 mm dick ist.

Mehrschichtige Kunststoffbahnen oder -platten zur Verwendung als Bodenbelag werden erfindungsgemäß bevorzugt auf PVC-Basis ausgebildet.

Typische Zusammensetzungen für die einzelnen Folien bzw. Schichten sind wie folgt:

### Weißfolie (Printfolie)

| Ausgangsmaterial | Mengenbereich (Gew.- %) | Bevorzugter Mengenbereich (Gew.-%) |
|---|---|---|
| PVC | 60-95 | 65-80 |
| Weichmacher | 5-35 | 10-30 |
| Stabilisator | 0,1-8 | 0,5-5 |
| Antistatika | 0,1-4 | 0,2-2 |
| Pigment | 2-12 | 3-7 |

### Unterschicht

| Ausgangsmaterial | Mengenbereich (Gew.- %) | Bevorzugter Mengenbereich (Gew.-%) |
|---|---|---|
| PVC-Scrap | 10-80 | 30-70 |
| PVC-Neumaterial | 10-80 | 5-50 |
| Weichmacher | 0-50 | 1,5-40 |
| Stabilisator | 0-5 | 0-3 |
| Antistatika | 0-4 | 0-2 |
| Gleitmittel | 0-2 | 0,2-0,7 |
| Füllstoff | 0-80 | 0-50 |
| Pigment | 0-2 | 0,2-1 |

Die Verarbeitungsbedingungen bei der Herstellung der Schichten bzw. Folien (Folie für das Granulat, Printfolie, Unterfolie) sind abhängig von der jeweiligen Schichtdicke, dem zu verarbeitenden Material etc..

Neben den genannten Schichten können je nach Bedarf auch weitere Schichten vorhanden sein. Beispielsweise kann zwischen der Weißfolie und der Unterschicht oder als letzte Schicht unter der Unterschicht eine Schicht zur Trittschalldämmung oder zur Wärmeisolation angeordnet sein. Ferner kann als unterste Schicht eine Haft- bzw. Klebeschicht angeordnet sein, so daß die mehrschichtigen Kunststoffbahnen oder -platten selbstklebend sind. Dies ist insbesondere bei Bodenbelägen vorteilhaft.

Bei Verwendung der erfindungsgemäßen Kunststoffbahnen oder -platten als Bodenbelag ist es bevorzugt, daß auf die Oberfläche der Nutzschicht, das heißt auf die Deckschicht, ein Finish zum Schutz und zur leichteren Pflege bzw. Reinigung des Bodenbelags aufgebracht wird. Zu diesem Zweck können übliche, reinigende und pflegende Substanzen aufgebracht werden, welche die optischen Eigenschaften bewahren bzw. wiederherstellen. Dabei handelt es sich im Normalfall um stark polymerhaltige Wachsdispersionen, die einen etwa 5 µm bis etwa 10 µm dicken Film bilden, der für die Zeit seines Vorhandenseins als eine Schutzschicht wirkt. Alternativ können die Bodenbeläge, insbesondere PVC-Bodenbeläge mit Lacken auf Polyurethan-Basis (sog. PU-Versiegelungen) versiegelt werden. Derartige PU-Versiegelungen, die wasserbasierend oder auch lösemittelfrei, z.B. UV-härtend, sein können, weisen normalerweise Schichtdicken im Bereich von etwa 5 µm bis etwa 50 µm auf.

Die erfindungsgemäße mehrschichtige Kunststoffbahn kann, wie schon vorstehend angedeutet, dadurch erhalten werden, dass die Deckschicht durch das Aufstreuen und Aufpressen bzw. Aufwalzen von Kunststoffgranulat auf die Unterschicht unter Druck und Wärme erzeugt wird, oder durch das Laminieren der Unterschicht mit der vorstehend beschriebenen Kunststoffschicht unter Druck und Wärme.

Wie schon vorstehend beschrieben, umfasst gemäß der vorliegenden Erfindung das Kunststoffgranulat granulierte Folie. Diese ist mit Effektpigmenten und/oder Leuchtpigmenten ausgeführt. Das Kunststoffgranulat kann dabei aus einer Foliensorte oder mehreren verschiedenen bestehen, wie beispielsweise unterschiedliche PVCs und/oder unterschiedliche Weichmacher, wobei erfindungsgemäß auch Gemische verschiedener granulierter Foliensorten mit und ohne Effektpigmenten und/oder Leuchtpigmenten verwendet werden können. Wie schon vorstehend beschrieben, können zudem erfindungsgemäß hinsichtlich der Foliensorten mit Effektpigmenten und/oder Leuchtpigmenten solche verwendet werden, die homogen ausgebildet sind oder vorstehend beschriebene Verschmierungen, Konzentrationen, Verzüge etc. der Pigmente aufweisen.

Die aus der vorstehend beschriebenen Folie erhaltenen Granulate werden auf die Zwischen- oder Unterschicht aufgestreut und beispielsweise mit einer statischen Presse zu einem entsprechenden Belag gepresst. Beim dynamischen Walzen wird das Granulat mit der Unterschicht, gegebenenfalls mit Zwischenschicht, beispielsweise einem Kalander zugeführt und zu einer Kunststoffschicht gewalzt.

Zur erfindungsgemäßen Laminierung der Unterschicht, gegebenenfalls mit Zwischenschicht, mit der Kunststoffschicht als Deckschicht werden diese in einer AUMA unter Anwendung von Druck (typischerweise etwa 8-30 N/cm²) und Temperatur (typischerweise etwa 170 bis 195°C) während eines Zeitraums von etwa 1 bis 1,5 Minuten kraftschlüssig miteinander verbunden.

Die Verwendung einer AUMA zur Laminierung der einzelnen Folien besitzt den vorteilhaften Effekt, daß sich die Gewebestruktur des Mitläuferbandes, welches zwischen dem Druckband und der Unterschicht mitgeführt wird, auf die Unterseite der Unterfolie überträgt. Dieser Gewebeabdruck erhöht die Haftung des Bodenbelags, wenn er mit Haftklebstoffen mit dem Untergrund verbunden wird, da die Klebemasse in die Vertiefungen eindringen kann und dadurch die mit Klebstoff in Kontakt stehende Oberfläche vergrößert wird.

Bei der Verwendung einer mittleren Folie zwischen den vorstehend genannten Schichten kann ein optischer Effekt erfindungsgemäß auch dadurch erzeugt werden, dass eine beispielsweise bedruckte mittlere Folie eine Veränderung der Struktur durch die angewendete Wärme erfährt. Beispielsweise Polyester zeigt schon bei niedrigeren Temperaturen materielle Veränderungen, als dies für PVC der Fall ist.

Darüber hinaus wird gemäß der vorliegenden Erfindung ein Verfahren zur Herstellung der Kunststoffschicht, wobei das schichtbildende Material sichtbare innere Diskontinuität aufweist, bereitgestellt, welches das Pressen oder Walzen von Kunststoffgranulat unter Druck und Wärme umfasst, wobei das Kunststoffgranulat granulierte Folie umfasst und wobei das Material der granulierten Folie

Effektpigmente und/oder Leuchtpigmente umfasst.

Die Verfahrensschritte des Pressens oder Walzens sind bereits vorstehend beschrieben.

Des weiteren wird gemäß der vorliegenden Erfindung ein Verfahren zur Herstellung einer mehrschichtigen Kunststoffbahn oder -platte, umfassend eine Unterschicht und eine auf der Unterschicht angeordnete und kraftschlüssig damit verbundene Deckschicht in Form einer Kunststoffschicht, wobei das schichtbildende Material sichtbare innere Diskontinuität aufweist, bereitgestellt, umfassend die folgenden Schritte:
- Bereitstellen einer Unterschicht,
- Aufstreuen von Kunststoffgranulat, wobei das kunststoffgranulat granulierte Folie umfasst und wobei das Material der granulierten Folie Effektpigmente und/oder Leuchtpigmente umfasst, auf die Unterschicht und
- Pressen oder Walzen des Kunststoffgranulats unter Druck und Wärme auf die Unterschicht,
oder
- Bereitstellen einer Unterschicht,
- Bereitstellen einer Deckschicht in Form der vorstehend beschriebenen erfindungsgemäßen Kunststoffschicht und
- Laminieren der Unterschicht mit der Deckschicht unter Druck und Wärme.

Zunächst wird in an sich bekannter Weise eine Schicht bzw. eine Folie bzw. ein Laminat aus zwei oder mehr Folien aus einem thermoplastischen Kunststoffmaterial bereitgestellt und die vorgefertigte Schicht kann einseitig auf einer Oberfläche geprägt werden, um eine oberflächengeprägte Unterschicht zu erhalten. Die Prägung kann beträchtlich vor dem Verbinden mit den anderen Schichten der Kunststoffbahn in einem separaten Arbeitsschritt erfolgen, aber auch unmittelbar vor dem Laminieren, sozusagen "on-line" vor der kraftschlüssigen Verbindung der Schichten.

Ferner wird, wie schon vorstehend beschrieben, ein Kunststoffgranulat auf die (geprägte) Oberfläche der Zwischen- oder Unterschicht gestreut und verpresst oder gewalzt. Für das Pressen zur Herstellung der erfindungsgemäßen Kunststoffschicht beträgt der Druckbereich 5 bis 140 bar und bevorzugt 40 bis 100 bar. Dabei erfolgt das Pressen bei einer Temperatur im Bereich von 150 bis 220°C, bevorzugt im Bereich von 175 bis 195°C. Im Fall des Walzens zur Herstellung der erfindungsgemäßen Kunststoffschicht beträgt der Walzenspaltbereich 0,05 bis 2 mm und bevorzugt 0,2 bis 0,7 mm. Dabei erfolgt das Walzen bei einer Temperatur im Bereich von 130 bis 220°C, bevorzugt im Bereich von 160 bis 190°C. Schließlich wird mit einer Geschwindigkeit von 15 bis 30 m/min, bevorzugt von 18 bis 24 m/min gewalzt.

Alternativ kann auch eine Deckschicht in Form der erfindungsgemäßen Kunststoffschicht bereitgestellt werden.

Die Deckschicht wird sodann über der Unterschicht in der Weise angeordnet, dass sie der (geprägten) Oberfläche der Unterschicht gegenüberliegt bzw. die beiden Schichten werden in dieser Anordnung einer Apparatur zum kraftschlüssigen Verbinden, zum Beispiel einer AUMA zugeführt.

Sofern eine weitere Schicht (Weißfolie) vorgesehen ist, wird diese zwischen der Deckschicht und der geprägten Unterschicht angeordnet bzw. zwischen der Deckschicht und der Unterschicht der Apparatur zum Verbinden der Schichten zugeführt.

Die oberflächliche Prägung der Unterfolie, falls erwünscht, (insbesondere im Falle des PVC) erfolgt bei einer Temperatur der Folie von 70-160°C, vorzugsweise 100-150°C, wobei die Temperatur der Prägewalze zwischen -15 und 70°C, vorzugsweise zwischen 10 und 60°C liegt.

Anschließend werden die Schichten unter Anwendung von Druck und Temperatur kraftschlüssig miteinander verbunden. Im Falle einer vorhandenen Prägung der Zwischen- oder Unterschicht wird dabei die Temperatur nur von der Seite der Deckschicht her beaufschlagt, wobei die Seite der Unterschicht nicht erwärmt oder sogar gekühlt wird.

Im Falle der Verwendung einer AUMA zum kraftschlüssigen Verbinden der einzelnen Folien bzw. Schichten weist die mit der Deckschicht in Kontakt tretende Walze eine Temperatur von 160-230°C, vorzugsweise 170-195°C auf, und die Geschwindigkeit, mit der das Laminat durch die AUMA transportiert wird, liegt im Bereich von 0,1 bis 10 m/min., vorzugsweise im Bereich von 1-5 m/min.

Eine weitere bevorzugte Herstellung der erfindungsgemäßen Kunststoffbahnen oder -platten erfolgt in der Weise, dass die kraftschlüssige Laminierung der einzelnen Folien bzw. Schichten bzw. vorlaminierten Folien unter Verwendung einer Apparatur erfolgt, die zwei Walzen aufweist, zwischen denen die Folien unter Druck hindurchgeführt werden. Dies hat den Vorteil, dass einerseits die mit der (transparenten) Deckschicht in Kontakt stehende Walze geheizt werden kann und andererseits auf einfache Weise auch die mit der Unterschicht in Kontakt stehende Walze, wenn nötig, gekühlt werden kann.

Vorteilhafterweise wird das Laminat anschließend bei Temperaturen von etwa 30 bis etwa 180°C, vorzugsweise etwa 70 bis etwa 120°C getempert. Diese Temperbehandlung wird in der Regel von einer Materialschrumpfung begleitet.

Nach dem kraftschlüssigen Verbinden der Schichten liegt die erfindungsgemäße mehrschichtige Kunststoffbahn oder -platte mit beispielsweise einer ausgeprägten dreidimensionalen Optik vor. Bei Verwendung als Bodenbelag kann die Kunststoffbahn oder -platte so wie erhalten eingesetzt werden; sie kann jedoch auch in kleinere Stücke, insbesondere Fliesen, geschnitten bzw. gestanzt werden.

Wie vorstehend erwähnt, kann die der Unterschicht zugewandte Oberfläche der erfindungsgemäßen Kunststoffschicht bereits bei deren Herstellung bedruckt werden oder kurz bevor sie der Laminiermaschine zugeführt wird. Zusätzlich oder statt dessen kann entweder die der Deckschicht zugewandte Oberfläche der Zwischenschicht (Weißfolie) oder die geprägte Oberfläche der Unterschicht bereits bedruckt sein oder kurz vor dem Verbinden mit der transparenten Deckschicht bedruckt werden.

In allen Ausführungsformen der Erfindung kann die Oberfläche der fertigen Kunststoffbahn oder -platte mit einem zusätzlichen Prägemuster versehen sein, um die Optik zu verstärken oder zu modifizieren und um beispielsweise die Oberfläche zu mattieren.

Die erfindungsgemäße Kunststoffbahn oder -platte weist vorzugsweise auf ihrer obersten Oberfläche (Nutzschicht bei einem Bodenbelag) eine zusätzliche Prägung auf, die entweder eine unregelmäßige Prägung, zum Beispiel eine feine Prägung zur Mattierung der Oberfläche ist, oder aber eine Prägung, die mit der Oberflächenprägung der Unterschicht kommuniziert, wodurch sich die dreidimensionale Optik der Kunststoffbahn verstärken oder modifizieren lässt.

Vorteilhafterweise handelt es sich bei der zusätzlichen Prägung auf der obersten Oberfläche um eine gleichmäßige Prägung bzw. eine Prägung mit einem regelmäßigen Muster von Erhebungen und Vertiefungen, da durch eine derartige Prägung das Anschmutzverhalten von z.B. einem Bodenbelag deutlich verbessert werden kann. Dieser Effekt ist auch als "Lotuseffekt" bekannt geworden. Es hat sich erwiesen, daß der Effekt der zusätzlichen Oberflächenstrukturierung am ausgeprägtesten ist, wenn der durchschnittliche Abstand zwischen Profilspitzen in der Mittellinie, entsprechend dem sogenannten Sm-Wert oder Rillenabstand Sm gemäß DIN 4768, in einem Bereich von größer als 200 µm und kleiner als 1000 µm liegt.

Hinsichtlich der Höhe der Erhebungen (gemittelte Rauhtiefe R_{z} gemäß DIN 4768) des geprägten Materials hat sich ein Wert im Bereich von 20 µm bis 200 µm als vorteilhaft erwiesen. Die Prägung kann beispielsweise mit einer Prägewalze erreicht werden.

Wenn die erfindungsgemäße Kunststoffbahn oder -platte neben den Eigenschaften der umfassten erfindungsgemäßen Kunststoffschicht eine wie vorstehend beschriebene zusätzliche Prägung aufweist, kann das erhaltene Produkt in diesem Zusammenhang entsprechend "Symmetrie" bzw. einen Rapport aufweisen.

Schließlich stellt die vorliegende Erfindung die Verwendung einer vorstehend beschriebenen mehrschichtigen Kunststoffbahn oder -platte als Wandbelag, Deckenbelag, Bodenbelag, Dekorfolie oder künstliches Furnier bereit. Bevorzugt ist hierbei erfindungsgemäß die Verwendung der mehrschichtigen Kunststoffbahn oder -platte als Bodenbelag.

Mit der vorliegenden Erfindung können auf einfache und kostengünstige Weise mehrschichtige Kunststoffbahnen oder -platten mit ausgeprägten optischen Effekten wie beispielsweise dreidimensionalen Optik und/oder Perlmutt-Effekt bereitgestellt werden, die als Wand- oder Deckenverkleidung, Dekorfolie, künstliches Furnier und insbesondere als Bodenbelag verwendet werden können. Dabei resultieren diese optischen Effekte von der umfassten erfindungsgemäßen Kunststoffschicht selbst, deren Material selbst sichtbare innere Unregelmäßigkeiten aufweist.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

### Beispiele

### Herstellung der Unterschicht

### a) Unterfolie mit glatter Oberfläche

Die Bestandteile der in Tabelle 1 aufgeführten Rezeptur werden in einem Gefäß eingewogen und mit einem gewöhnlichen Küchenknetrührer vermischt. Das so erhaltene Trockengemisch wird an einem Walzwerk bei 170°C plastifiziert und homogenisiert; Spalteinstellung 0,2 mm, Geschwindigkeit der beiden Walzen: 19,5 m/min zu 22 m/min, Walzendurchmesser: ca. 20 cm, Mischungszeit auf dem Walzwerk: ca. 5-6 min.

Nach der Homogenisierungsphase werden ca. 0,8 mm dicke Folien vom Walzwerk gezogen.

### b) Unterfolie mit geprägter Oberfläche

Die eingesetzten Unterfolien wurden aus PVC-Scrap, Pigment, Weichmacher und PVC hergestellt. Dabei wurden die Stoffe gemischt und geknetet, zweimal gewalzt und anschließend kalandriert. Der Unterschied zu den ungeprägten Unterfolien besteht hauptsächlich in der Dicke (z.B. 1,6 mm) sowie in der Oberflächenform.

### Herstellung von Granulat aus Klarfolie mit Effektpigmenten und/oder Leuchtpigmenten

Die Bestandteile der in den Tabellen 2 und 3 aufgeführten Rezepturen werden in einem Gefäß eingewogen und mit einem gewöhnlichen Küchenknetrührer vermischt. Das so erhaltene Trockengemisch wird an einem Walzwerk bei 170°C plastifiziert und homogenisiert; Spalteinstellung 0,2 mm, Geschwindigkeit der beiden Walzen: 19,5 m/min zu 22 m/min, Walzendurchmesser: ca. 20 cm, Mischungszeit auf dem Walzwerk: ca. 5-6 min.

Nach der Homogenisierungsphase werden 0,3 mm bzw. 0,5 mm dicke Folien vom Walzwerk gezogen.

Anschließend werden die Klarfolien granuliert, in einer Schneidmühle bearbeitet und nachfolgend gesiebt (12 mm Ecksieb-Einsatz).

### Herstellung eines heterogenen Kalanderbelages mit Effektpigmenten

Die oben erhaltenen Granulate werden auf die Unterfolie aufgestreut und in der statischen Presse zu einem 2 mm dicken Belag verpresst.

### Beispiel 1

0,3 mm Klarfolie granuliert Rezeptur 1
1,6 mm Unterfolie mit Prägung

Klarfolien-Granulat wird auf die Unterfolie aufgestreut und in der statischen Presse zu einem 2 mm dicken Belag verpresst.
Temperatur oben: 170°C, Temperatur unten: 170°C.
Anwärmzeit: 2 min, Kolbendruck: 40 bar.
Presszeit: 2 min, Kolbendruck: 140 bar.

### Beispiel 2

0,3 mm Klarfolie granuliert, Rezeptur 1
1,6 mm Unterfolie mit Prägung

Klarfolien-Granulat wird auf die Unterfolie aufgestreut und in der statischen Presse zu einem 2 mm dicken Belag verpresst worden.
Temperatur oben: 175°C, Temperatur unten: 175°C.
Anwärmzeit: 2 min, Kolbendruck: 40 bar.
Presszeit: 2 min, Kolbendruck: 140 bar.

### Beispiel 3

0,3 mm Klarfolie granuliert, Rezeptur 1
1,1 mm Unterfolie mit Prägung

Klarfolien-Granulat wird auf die Unterfolie aufgestreut und in der statischen Presse zu einem 2 mm dicken Belag verpresst.
Temperatur oben: 190°C, Temperatur unten: 150°C.
Anwärmzeit: 2 min, Kolbendruck: 40 bar.
Presszeit: 2 min, Kolbendruck: 140 bar.

### Beispiel 4

0,3 mm Klarfolie granuliert, Rezeptur 1 + Klarfolie granuliert Rezeptur Leucht 1, Mengenverhältnis 50:50
1,1 mm Unterfolie mit Prägung

Klarfolien-Granulat wird auf die Unterfolie aufgestreut und in der statischen Presse zu einem 2 mm dicken Belag verpresst.
Temperatur oben: 190°C, Temperatur unten: 150°C.
Anwärmzeit: 2 min, Kolbendruck: 40 bar.
Presszeit: 2 min, Kolbendruck: 140 bar.

### Beispiel 5

0,3 mm Klarfolie granuliert, Rezeptur 1 + Klarfolie granuliert Rezeptur Standard, Mengenverhältnis 70:30
Weißfolie 20023-50
0,7 mm Unterfolie mit Prägung

Klarfolien-Granulat wird auf die Weißfolie auf der Unterfolie aufgestreut und in der statischen Presse zu einem 2 mm dicken Belag verpresst.
Temperatur oben: 175°C, Temperatur unten: 175°C.
Anwärmzeit: 2 min, Kolbendruck: 40 bar.
Presszeit: 2 min, Kolbendruck: 140 bar.

Das resultierende Mehrschichtsystem ist in Figur 1 abgebildet.

### Beispiel 6

0,3 mm Klarfolie granuliert, Rezeptur 1 + Klarfolie granuliert Rezeptur Standard + Klarfolie granuliert Rezeptur Leucht 1, Mengenverhältnis 50:25:25
Weißfolie 20023-50
0,7 mm Unterfolie mit Prägung

Klarfolien-Granulat wird auf die Weißfolie auf der Unterfolie aufgestreut und in der statischen Presse zu einem 2 mm dicken Belag verpresst.
Temperatur oben: 175°C, Temperatur unten: 175°C.
Anwärmzeit: 2 min, Kolbendruck: 40 bar.
Presszeit: 2 min, Kolbendruck: 140 bar.

Das resultierende Mehrschichtsystem ist in Figur 2 abgebildet.

### Beispiel 7

0,3 mm Klarfolie granuliert, Rezeptur 1 + Klarfolie granuliert Rezeptur Standard (2,8 mm, Granulierung an der Schneidmühle mit einem 4 mm Lochsieb), Mengenverhältnis 40:60
Weißfolie 20023-50
0,7 mm Unterfolie mit Prägung

Klarfolien-Granulat wird auf die Weißfolie auf der Unterfolie aufgestreut und in der statischen Presse zu einem 2 mm dicken Belag verpresst.
Temperatur oben: 175°C, Temperatur unten: 175°C.
Anwärmzeit: 2 min, Kolbendruck: 40 bar.
Presszeit: 2 min, Kolbendruck: 140 bar.

**Tabelle 1**

| | Anteil (Gew.-%) |
|---|---|
| PVC | 36 |
| Weichmacher | 13,8 |
| Füllstoffe | 48 |
| Pigmente | 0,7 |
| Stabilisatoren | 0,8 |
| Gleitmittel | 0,7 |

**Tabelle 2**

| | Standard | Rezeptur 1 |
|---|---|---|
| | Anteil (Gew.-%) | Anteil (Gew.-%) |
| PVC | 71,5 | 71,0 |
| Weichmacher | 26,7 | 26,7 |
| Pigmente | 0 | 0,5 |
| Stabilisatoren | 1,8 | 1,8 |

**Tabelle 3**

| | Standard | Rezeptur Leucht 1 |
|---|---|---|
| | Anteil (Gew.-%) | Anteil (Gew.-%) |
| PVC | 71,5 | 59,0 |
| Weichmacher | 26,7 | 26,7 |
| Leuchtpigmentpaste | 0 | 12 |
| Pigmente | 0 | 0,5 |
| Stabilisatoren | 1,8 | 1,8 |

## Patentansprüche

1. Kunststoffschicht, wobei das schichtbildende Material sichtbare innere Diskontinuität aufweist, erhältlich durch das Pressen oder Walzen von Kunststoffgranulat unter Druck und Wärme, wobei das Kunststoffgranulat granulierte Folie umfasst und wobei das Material der granulierten Folie Effektpigmente und/oder Leuchtpigmente umfasst.

2. Kunststoffschicht nach Anspruch 1, wobei die sichtbare innere Diskontinuität aus der Gruppe von durchsichtigen/nicht-durchsichtigen Bereichen, Materialverwerfungen, Verschmierungen, Ebenenversatz, Faltungen, Überlagerungen, Schlieren, Kanten und Kinken, einzeln oder in Kombination, ausgewählt ist.

3. Kunststoffschicht nach Anspruch 1 oder 2, wobei die granulierte Folie zwei oder mehr verschiedenene Folien umfasst.

4. Mehrschichtige Kunststoffbahn oder -platte, umfassend eine Unterschicht und eine auf der Unterschicht angeordnete und kraftschlüssig damit verbundene Deckschicht in Form der Kunststoffschicht nach einem der Ansprüche 1 bis 3.

5. Mehrschichtige Kunststoffbahn oder -platte nach Anspruch 4, wobei die Deckschicht durch das Aufstreuen und Aufpressen des Kunststoffgranulats auf die Unterschicht unter Druck und Wärme oder durch das Laminieren der Unterschicht mit der Kunststoffschicht nach einem der Ansprüche 1 bis 3 unter Druck und Wärme erhältlich ist.

6. Verfahren zur Herstellung einer Kunststoffschicht, wobei das schichtbildende Material sichtbare innere Diskontinuität aufweist, umfassend das Pressen oder Walzen von Kunstoffgranulat unter Druck und Wärme, wobei das Kunststoffgranulat granulierte Folie umfasst und wobei das Material der granulierten Folie Effektpigmente und/oder Leuchtpigmente umfasst.

7. Verfahren zur Herstellung einer mehrschichtigen Kunststoffbahn oder -platte, umfassend eine Unterschicht und eine auf der Unterschicht angeordnete und kraftschlüssig damit verbundene Deckschicht in Form einer Kunststoffschicht, wobei das die Kunststoffschicht bildende Material sichtbare innere Diskontinuität aufweist, umfassend die folgenden Schritte:
- Bereitstellen einer Unterschicht,
- Aufstreuen von Kunststoffgranulat, wobei das Kunststoffgranulat granulierte Folie umfasst und wobei das Material der granulierten Folie Effekt-pigmente und/oder Leuchtpigmente umfasst, auf die Unterschicht und
- Pressen oder Walzen des Kunststoffgranulats unter Druck und Wärme auf die Unterschicht,
oder
- Bereitstellen einer Unterschicht,
- Bereitstellen einer Deckschicht in Form der Kunststoffschicht nach einem der Ansprüche 1 bis 3 und
- Laminieren der Unterschicht mit der Deckschicht unter Druck und Wärme.

8. Verwendung der mehrschichtigen Kunststoffbahn oder -platte nach Anspruch 4 oder 5 als Wandbelag, Deckenbelag, Bodenbelag, Dekorfolie oder künstliches Furnier.

## Claims

1. Plastic layer, the layer-forming material having a visible inner discontinuity, obtainable by the pressing or rolling of polymer pellets under pressure and heat, the polymer pellets comprising pelletized film and the material of the pelletized film comprising effect pigments and/or luminescent pigments.

2. Plastic layer according to Claim 1, the visible inner discontinuity being selected from the group comprising transparent/non-transparent regions, material distortions, smears, offset levels, folds, overlays, streaks, edges and kinks, individually or in combination.

3. Plastic layer according to Claim 1 or 2, the pelletized film comprising two or more different films.

4. Multilayer plastic web or sheet, comprising a lower layer and a cover layer, arranged on the lower layer and non-positively connected to it, in the form of the plastic layer according to one of Claims 1 to 3.

5. Multilayer plastic web or sheet according to Claim 4, the cover layer being obtainable by scattering and pressing the polymer pellets onto the lower layer under pressure and heat or by laminating the lower layer with the plastic layer according to one of Claims 1 to 3 under pressure and heat.

6. Process for manufacturing a plastic layer, the layer-forming material having a visible inner discontinuity, comprising the pressing or rolling of polymer pellets under pressure and heat, the polymer pellets comprising pelletized film and the material of the pelletized film comprising effect pigments and/or luminescent pigments.

7. Process for manufacturing a multilayer plastic web or sheet, comprising a lower layer and a cover layer, arranged on the lower layer and non-positively connected to it, in the form of a plastic layer, the material forming the plastic layer having a visible inner discontinuity, comprising the following steps:
- providing a lower layer,
- scattering polymer pellets, the polymer pellets comprising pelletized film and the material of the pelletized film comprising effect pigments and/or luminescent pigments, onto the lower layer and
- pressing or rolling the polymer pellets onto the lower layer under pressure and heat,
or
- providing a lower layer,
- providing a cover layer in the form of the plastic layer according to one of Claims 1 to 3 and
- laminating the lower layer with the cover layer under pressure and heat.

8. Use of the multilayer plastic web or sheet according to Claim 4 or 5 as a wall covering, ceiling covering, floor covering, decorative film or artificial veneer.

## Revendications

1. Couche de plastique, sachant que le matériau formant la couche présente une discontinuité interne visible, obtenue par pressage ou laminage de granulés de plastique sous l'action de la pression et de la chaleur, sachant que les granulés de plastique comprennent un film granulaire et que le matériau du film granulaire comprend des pigments à effet et/ou des pigments luminescents.

2. Couche de plastique selon la revendication 1, sachant que la discontinuité interne visible est choisie parmi le groupe constitué de zones transparentes/non transparentes, de déformations de matériau, de lutages, de décalages de niveaux, de plis, de chevauchements, de stries, d'arêtes et de vrilles, ces formes apparaissant seules ou en combinaison.

3. Couche de plastique selon la revendication 1 ou 2, sachant que le film granulaire comprend deux films différents ou plus.

4. Bande ou plaque de plastique à plusieurs couches, comprenant une couche inférieure et une couche de recouvrement disposée sur la couche inférieure et reliée à cette dernière à force, sous la forme d'une couche de plastique, selon l'une quelconque des revendications 1 à 3.

5. Bande ou plaque de plastique à plusieurs couches selon la revendication 4, sachant que la couche de recouvrement est obtenue par dispersion et compression des granulés de plastique sur la couche inférieure sous l'action de la pression et de la chaleur ou en stratifiant la couche inférieure avec la couche de plastique selon l'une quelconque des revendications 1 à 3, sous l'action de la pression et de la chaleur.

6. Procédé de fabrication d'une couche de plastique, sachant que le matériau formant la couche présente une discontinuité interne visible, comprenant l'étape consistant à presser ou laminer des granulés de plastique sous l'action de la pression et de la chaleur, sachant que les granulés de plastique comprennent un film granulaire et que le matériau du film granulaire comprend des pigments à effet et/ou des pigments luminescents.

7. Procédé de fabrication d'une bande ou d'une plaque de plastique à plusieurs couches, comprenant une couche inférieure et une couche de recouvrement disposée sur la couche inférieure ou reliée à cette dernière à force sous la forme d'une couche de plastique, sachant que le matériau formant la couche de plastique présente une discontinuité interne visible, ledit procédé comprenant les étapes suivantes consistant à :
- fournir une couche inférieure ;
- disperser des granulés de plastique sur la couche inférieure, sachant que les granulés de plastique comprennent un film granulaire et que le matériau du film granulaire comprend des pigments à effet et/ou des pigments luminescents ; et
- presser ou laminer les granulés de plastique sous l'action de la pression et de la chaleur sur la couche inférieure ;
ou
- fournir une couche inférieure ;
- fournir une couche de recouvrement sous la forme d'une couche de plastique selon l'une quelconque des revendications 1 à 3 ; et
- stratifier la couche inférieure avec la couche de recouvrement sous l'action de la pression et de la chaleur.

8. Utilisation de la bande ou de la plaque de plastique à plusieurs couches selon la revendication 4 ou 5 comme revêtement mural, revêtement de plafond, revêtement de sol, film décoratif ou placage synthétique.
